# EUROPÄISCHE PATENTANMELDUNG

(11) **EP 1 992 863 A2**
(43) Veröffentlichungstag der Anmeldung: **19.11.2008**
(21) Anmeldenummer: 08008837.0
(22) Anmeldetag: 13.05.2008
(51) Int. Cl.: F16L 59/14

(54) **Kanal zum Weiterleiten von Gasen und/oder Kabeln**

(30) Priorität: 15.05.2007 DE 202007006952 U
(71) Anmelder: Odenwald Chemie GmbH, 69250 Schöngau (DE)
(72) Erfinder: Augele, Hans-Peter, 69118 Heidelberg (DE)
(74) Vertreter: Bauer, Clemens

(57) **Zusammenfassung**

Kanal (1) zum Weiterleiten von Gasen und/oder Kabeln, bei dem thermisch und/oder akustisch wirksames Dämm-Material für die Kanalwandung (3-6) verwendet ist, dadurch gekennzeichnet, dass das Dämm-Material Fasern aus insb. Polyester aufweist und die Kanalwandung (3-6) bildet und dass das Dämm-Material an den zusammengefügten Rändern (3a,9a) verschweißt, verprägt, verpresst oder verklebt sind, so dass die gebildeten Kanten und/oder Überlappungen für die Eigensteifigkeit des Kanals (1) sorgen.

## Beschreibung

Kanäle der im Oberbegriff des Anspruchs 1 genannten Gattung sind bereits bekannt (DE 934 644). Neben den aus Metall bestehenden und vorwiegend im Gießverfahren hergestellten Kanäle sind auch Kunststoffkanäle bekannt, bei denen das Kunststoffmaterial im flüssigen Zustand durch Spritzgießen oder Blasformen in die gewünschte Konfiguration des Kanals gebracht wird. Dabei haben sich hinsichtlich ihrer Steifigkeit Kunststoffe aus Polypropylen bewährt.

Der Erfindung liegt die Aufgabe zugrunde, einen Kanal dieser Gattung mit möglichst guten thermisch und/oder akustisch isolierenden Eigenschaften auszubilden. Dabei ist auch erwünscht, dass der Kanal leicht in gewisser Weise etwas verformbar oder flexibel und möglichst sortenrein entsorgbar und ggf. recyclebar ist.

Die Erfindung ist im Anspruch 1 gekennzeichnet, in Unteransprüchen sind bevorzugte Ausbildungen der Erfindung beansprucht und in der folgenden Beschreibung sind bevorzugte Ausführungsbeispiele geschildert.

Bei der Erfindung besteht das Material insbesondere aus Polyesterfasern. Diese können bahnförmig, als Rollenware, Plattenware, Form-, Schnitt- und Stanzzuschnitte oder als Einlegeteile in die gewünschte Kanalkonfiguration geformt oder vorgeformt werden. Die Eigensteifigkeit des Kanals aus Polyesterfasern wird vorwiegend durch Verschweißen, Verprägen, Verpressen und/oder Verkleben der zusammengefügten Rändern insb. im Bereich der Kanten und/oder Überlappungen des Dämm-Materials gewährleistet, wie dies auch anhand von Ausführungsbeispielen gemäß der Zeichnung noch näher erläutert wird.

Als Polyesterfasermaterial eignen sich vor allem Vliese und Matten sowie Watte. Darüber hinaus können zur Wahrung der Sortenreinheit auch zusätzlich Polyesterfolien angewendet werden, die sich besonders als Innen- und/oder Außenverkleidung der Kanalwandung eignen. Auch Schaumstoffmaterial kann zur zusätzlichen Verbesserung der Isolierwirkung in die Kanalwandung eingesetzt werden.

Der Kanal sollte an beiden Enden verstärkte Endstücke aufweisen. Die verstärkten Endstücke können als Flansch oder zum Einstecken in Gegenstücke ausgebildet sein.

Insbesondere flache Kanalwandungsteile werden durch gekrümmte Verbindungsteile vorzugsweise miteinander verschweißt.

Darüber hinaus kann der Kanal auch Übergangsstücke aufweisen, die einen größeren freien Durchlassquerschnitt als die übrigen Kanalteile oder bei gleichem Durchlassvolumen eine andere Querschnittsform enthalten.

Sofern der Kanal außer an den Enden auch an anderen Stellen Befestigungsorgane benötigt, empfiehlt es sich, Befestigungslaschen insbesondere gleichfalls aus verdichtetem Polyesterfasermaterial zu verwenden.

Die Endstücke, Übergangsstücke und/oder Befestigungslaschen können gleichfalls aus Polyesterfasern oder Werkstoffen auf insb. Polyesterbasis bestehen.

Darüber hinaus ist es auch möglich, die Kanalwandung in Sandwich-Bauweise aus mehreren Polyesterschichten, darunter Polyestervlies und/oder Polyesterwatte aufzubauen. Die Sandwich-Wandung kann auch zusätzlich eine oder mehrere Polyesterfolien und/oder Polyester-Deckvliese, die insbesondere oliphob und/oder hydrophob ausgerüstet sind, insbesondere als Innen- und/oder Außenverkleidung aufweisen.

Die mechanisch besonders beanspruchten Kanalteile, wie Endstücke, Übergangsstücke, Verbindungsteile und Befestigungslaschen sollten insb. verdichtete Polyesterfaserstrukturen aufweisen. Zu diesem Zweck werden verhältnismäßig lockere Polyestervliese insb. unter Druck und/oder Hitze verpresst, verklebt oder verschweißt und dadurch dauerhaft verfestigt.

Die Sandwich-Bauweise kann auch eine Polyesterfolie, eine Polyesterfaser-Zwischenschicht in Form von Vlies und eine Polyesterfaser-Deckschicht gleichfalls als Vlies aufweisen.

Es versteht sich, dass auch zusätzliche Verstärkungs- und/oder Versteifungselemente in den Kanalmantel eingelegt und/oder auf diesen aufgesetzt werden können. Hierfür eignen sich gitterförmige Verstärkungs- bzw. Versteifungselemente. An den versteifenden Verbindungsenden bzw. -rändern können auch zusätzliche Zwischenteile eingefügt sein, welche das Verbinden begünstigen.

Der erfindungsgemäße Kanal kann zum Weiterleiten von Luft, beispielsweise zum Be- und Entlüften von Gebäudeteilen oder in Kraftfahrzeugen, Anwendung finden. Seine thermische und akustische Isolierfähigkeit verhindert eine zu starke Ableitung von Wärme bzw. Kälte nach außerhalb des Kanals und auch eine zu starke Schallübertragung in die Umgebung um den Kanal. In dem Kanal können auch Antriebe untergebracht werden, zu denen von außen elektrische Antriebsleitungen oder pneumatische Antriebsleitungen Zugang haben. Auch geräuschabsorbierende Gehäuse und Verkleidungen können auf diese Weise und mit diesen Materialaufbauten hergestellt werden.

Es versteht sich, dass der Kanal in unterschiedlichen Farben, beispielsweise schwarz oder weiß oder auch marmoriert gefärbt sein kann.

Erfindungsgemäße Kanäle zeichnen sich durch einfache insb. maschinelle Herstellbarkeit, geringes Gewicht und gutes Isoliervermögen aus. Durch entsprechende Werkzeuge werden Zuschnitte aus Polyesterfasern entsprechend der gewünschten Kanalgeometrie an den zusammenstossenden und/oder überlappenden Rändern bzw. Enden miteinander insb. verschweißt.

Insofern empfiehlt sich die Verwendung erfindungsgemäßer Kanäle vor allem bei der Sonderfertigung von Spezialkanälen, für die keine Massenherstellung erforderlich ist. Dabei besteht gegenüber tiefgezogenen Twin-Sheet-Kanälen ein größerer Gestaltungsspielraum. Besonders hervorzuheben ist die Beständigkeit der Polyesterfaserteile gegenüber Hydrolyse und Schimmelpilz sowie deren Temperatur und Chemikalienbeständigkeit.

Es versteht sich, dass erfindungsgemäße Kanäle bei Spezialverwendungen oberflächlich mit zusätzlichen Schutzcoatings versehen sein können.

In den Zeichnungen zeigen:
- Figur 1: ein Beispiel für einen erfindungsgemäßen Kanal;
- Figur 2: einen Querschnitt desselben und Figur 2a einen vergrößerten Eckausschnitt und
- Figur 3: gleichfalls einen Querschnitt mit einem vergrößerten Eckausschnitt in Figur 3a.

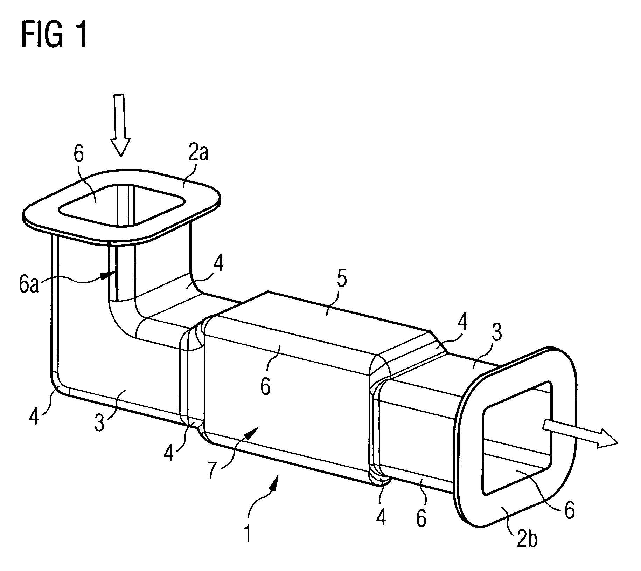

Der Kanal 1 von Fig. 1 weist an den Enden Endstücke 2a und 2b auf. Der Kanal 1 dient zum Hindurchführen von Zuluft in Pfeilrichtung durch den Kanal 1. Dabei ist der Kanal 1 aus flachen Teilen 3, 5 und abgerundeten bzw. abgewinkelten Teilen 4, 6 zusammengesetzt. Dabei wird dafür gesorgt, dass die abgerundeten bzw. abgewinkelten Teile 4, 6 gegenüber den flachen Teilen 3, 5 eine größere Steifigkeit aufweisen, was beispielsweise durch stärkeres Verdichten oder überlappendes Verschweißen wie in der Stelle 6a erfolgen kann.

Der Kanal 1 bei diesem Ausführungsbeispiel zieht sich in Längsrichtung des Übergangsstückes 7 hin, biegt aber links von diesem im Bereich des flachen Teils 3 unter rechtem Winkel nach oben ab, so dass die beiden Endstücke 2a und 2b in rechtwinklig zueinander verlaufenden Ebenen angeordnet sind. Diese Endstücke 2a, 2b können auch mit Durchbrechungen versehen sein, um Verbindungsflansche zu anderen Aggregaten zu bilden, durch die die Abluft zuströmt und in die die Abluft abströmt. Innerhalb des Übergangsstücks 7 können Einbauaggregate angeordnet sein, zu denen die Luft strömt und von denen die Luft wieder weggeleitet wird.

Der Kanal gemäß der Zeichnung kann aber auch zur Umhüllung von Kabeln, also als "Kabelkanal" Anwendung finden.

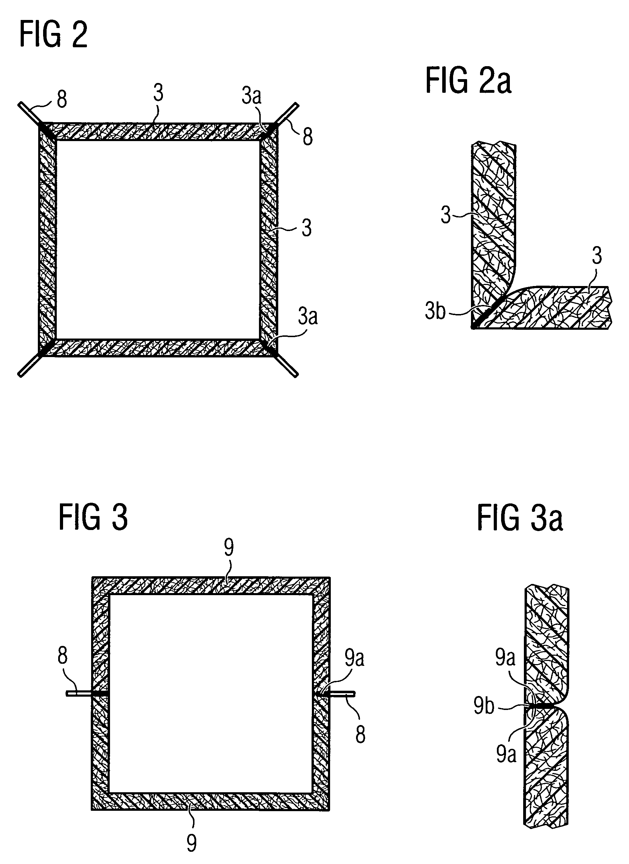

In den Figuren 2 und 3 sind Querschnitte durch einen Kanal 1 bei alternativen Ausführungen der Verbindungen der einzelnen flachen Teile 3 bzw. 5 dargestellt. Gemäß Figur 2 ist der Kanalquerschnitt durch vier etwa gleiche Polyesterfasermatten zusammengesetzt, welche die flachen Teile 3 bilden. An den zusammenstoßenden Rändern 3a benachbarter flacher Teile 3 findet das Verbinden insb. durch Verschweißen beispielsweise gemäß dem vergrößerten Querschnittsbild von Figur 2a statt; dort ist die Schweißstelle 3b mit einem verstärkten Linienzug dargestellt, während sich die Ränder 3a hinter der Schweißstelle 3b in Richtung zum Kanalinneren etwas aufspreizen. Die Schweißnaht versteift das Gebilde.

An den Rändern 3a können auch zusätzliche versteifende Zwischenteile 8 eingefügt sein, um das Verbinden zu begünstigen. Diese sind in Figur 2 lediglich beispielhaft als nach außen unter einem Winkel von 45° zur jeweiligen Ebene der flachen Teile 3 angedeutet.

Gemäß Figur 3 ist die Kanalwand dagegen nur aus zwei Materialschichten aus Polyesterfasern zusammengesetzt. Diese Teile 9 sind im Querschnitt etwa U-förmig und stoßen an ihren Rändern 9a zusammen, um dort gemäß Figur 3a die Schweißstelle 9b zu bilden. Auch hier können zusätzliche die Verbindung begünstigende Zwischenteile 8 an den Verbindungsstellen eingefügt oder von außen aufgesetzt sein.

## Patentansprüche

1. Kanal zum Weiterleiten von Gasen und/oder Kabeln, bei dem thermisch und/oder akustisch wirksames Dämm-Material für die Kanalwandung verwendet ist,
**dadurch gekennzeichnet,**
**dass** das Dämm-Material Fasern aus insb. Polyester aufweist und die Kanalwandung bildet und dass das Dämm-Material an den zusammengefügten Rändern verschweißt, verprägt, verpresst oder verklebt sind, so dass die gebildeten Kanten und/oder Überlappungen für die Eigensteifigkeit des Kanals (1) sorgen.

2. Kanal nach Anspruch 1,
**dadurch gekennzeichnet,**
**dass** das Dämm-Material in Form von Bahnen und/oder Platten verwendet ist.

3. Kanal nach Anspruch 1 oder 2,
**dadurch gekennzeichnet,**
**dass** Rändern des Bahn- oder Plattenmaterials überlappt sind.

4. Kanal nach einem der vorherigen Ansprüche,
**dadurch gekennzeichnet,**
**dass** der Kanal (1) an den Enden Endstücke (2a, 2b) aufweist.

5. Kanal nach Anspruch 4,
**dadurch gekennzeichnet,**
**dass** die Endstücke (2a, 2b) als Flansche ausgebildet sind.

6. Kanal nach Anspruch 5,
**dadurch gekennzeichnet,**
**dass** die Endstücke zum Einstecken in Gegenstücke ausgebildet sind.

7. Kanal nach einem der vorhergehenden Ansprüche,
**dadurch gekennzeichnet,**
**dass** flache Kanalwandungsteile (3, 5) durch gekrümmte versteifende Verbindungsstücke (4, 6) miteinander verschweißt sind.

8. Kanal nach einem der vorhergehenden Ansprüchen,
**dadurch gekennzeichnet, dass** Ränder des Dämm-Materials unter Einfügen von Zwischenteilen miteinander verbunden sind.

9. Kanal nach Anspruch 8,
**dadurch gekennzeichnet,**
**dass** die Zwischenteile über die Ränder des Dämm-Materials vorstehen und dort verschweißt, verpresst oder verklebt sind.

10. Kanal nach einem der vorhergehenden Ansprüche,
**dadurch gekennzeichnet,**
**dass** der Kanal (1) Übergangsstücke (7) mit anderen Querschnittsformen aber im Wesentlichen gleichem freien Durchlassvolumen wie die übrigen Kanalteile aufweist.

11. Kanal nach einem der vorhergehenden Ansprüche,
**dadurch gekennzeichnet,**
**dass** mit dem Kanal (1) Befestigungslaschen verschweißt, verprägt oder verklebt sind.

12. Kanal nach einem der vorhergehenden Ansprüche,
**dadurch gekennzeichnet,**
**dass** Endstücke (2a, 2b), Übergangsstücke (7) und/oder Befestigungslaschen (9) gleichfalls Polyesterfasern aufweisen.

13. Kanal nach einem der vorhergehenden Ansprüche,
**dadurch gekennzeichnet,**
**dass** die Kanalwandung in Sandwich-Bauweise aus mehreren Polyesterschichten, darunter Polyestervlies und/oder Polyesterwatte aufgebaut ist.

14. Kanal nach Anspruch 13,
**dadurch gekennzeichnet,**
**dass** die Sandwich-Bauweise eine Polyesterfolie, ein Polyesterfaservlies und ein Polyesterfaser-Deckvlies aufweist.

15. Kanal nach einem der vorhergehenden Ansprüche,
**dadurch gekennzeichnet,**
**dass** die Kanalwandung zusätzlich eine Polyesterfolie als Innen- und/oder Außenverkleidung aufweist.

16. Kanal nach einem der vorhergehenden Ansprüche,
**dadurch gekennzeichnet,**
**dass** Endstücke (2a, 2b), Übergangsstücke (7), Verbindungsteile (4, 6) und/oder Befestigungslaschen verdichteter Polyesterfaserstrukturen aufweisen.

17. Kanal nach einem der vorhergehenden Ansprüche,
**dadurch gekennzeichnet,**
**dass** zusätzliche Verstärkungs- bzw. Versteifungselemente in den Kanalmantel eingelegt sind.

18. Kanal nach Anspruch 17,
**dadurch gekennzeichnet,**
**dass** gitterförmige Verstärkungs- bzw. Versteifungselemente verwendet sind.
